# EUROPÄISCHE PATENTSCHRIFT

(11) **EP 1 214 173 B1**
(45) Veröffentlichungstag und Bekanntmachung des Hinweises auf die Patenterteilung: **22.10.2003**
(21) Anmeldenummer: 01903596.3
(22) Anmeldetag: 05.01.2001
(51) Int. Cl.: B24B 31/16, B08B 7/02

(54) **VERFAHREN UND VORRICHTUNG ZUM BEFREIEN METALLISCHER WERKSTÜCKE VON FESTGEKLEMMTEN GLEITSCHLEIFKÖRPERN ODER DERGLEICHEN**
METHOD AND DEVICE FOR RELEASING METALLIC WORKPIECES FROM CLAMPED CHIPS OR THE LIKE
PROCEDE ET DISPOSITIF PERMETTANT DE RETIRER DES CORPS DE PONCAGE BLOQUES OU DES CORPS SIMILAIRES SUR DES PIECES A USINER METALLIQUES

(30) Priorität: 13.01.2000 DE 10001041
(43) Veröffentlichungstag der Anmeldung: 19.06.2002
(73) Patentinhaber: Sieverts, Christof, 38118 Braunschweig (DE)
(72) Erfinder: WALENZIAK, Bernhard, 38304 Wolfenbüttel (DE)
(74) Vertreter: Gramm, Werner, Prof. Dipl.-Ing.
(86) Internationale Anmeldenummer: DE0100025
(87) Internationale Veröffentlichungsnummer: WO01051252

(56) Entgegenhaltungen:
- EP-A- 1 038 597
- DE-A- 3 026 510
- US-A- 5 820 011

## Beschreibung

Die Erfindung betrifft ein Verfahren und eine Vorrichtung zum Befreien metallischer Werkstücke von anhaftenden bzw. festgeklemmten, aus Hartstoffen bestehenden Gleitschleifkörpern oder dergleichen.

Gleitschleifen ist ein spanendes Fertigungsverfahren, bei dem zwischen den Werkstücken und einer Vielzahl von Gleitschleifkörpern (Chips) unregelmäßige Relativbewegungen stattfinden. Dabei wird auf mechanischem und ggf. auch auf mechanisch-chemischem Wege ein Materialabtrag an der Werkstückoberfläche erreicht, deren Eigenschaften dadurch verbessert werden. Typische Anwendungen des Gleitschleifens sind das Entgraten und Kantenrunden, Reinigen, Aufhellen, Glätten, Glänzen, Polieren, Entzundern und Entrosten. Die zu bearbeitenden Werkstücke werden zusammen mit einer größeren Menge von Chips, denen in den meisten Fällen in Wasser gelöste chemische Gleitschleif-Zusatzmittel zugesetzt sind, in einen Arbeitsbehälter gegeben. Dieser versetzt das eingeführte Gemisch durch Rotation, Vibration oder Fliehkraft in Mischbewegung. Dabei finden intensive Relativbewegungen zwischen den Chips und den Werkstücken statt, die den gewünschten Materialabtrag bewirken.

Die Gleitschleifkörper bestehen aus Körnern verschiedener Hartstoffe wie z.B. Al₂O₃ und SiC, die vorzugsweise keramisch gebunden sind. Beim Gleitschleifen können sich Gleitschleifkörper in entsprechend dimensionierten Hohlräumen, Bohrungen, Aussparungen, Vertiefungen oder Spalten der metallischen Werkstücke festsetzen. Häufig verklemmen sich hier die Gleitschleifkörper derart, dass es schwierig und teilweise sogar unmöglich ist, die Werkstücke von derart festgeklemmten Gleitschleifkörpern zu befreien. Bisher wird dies meist in Handarbeit durchgeführt, wobei die Gefahr einer Beschädigung des Werkstückes besteht, und ein 100%iger Erfolg nicht garantiert werden kann.

Aus der deutschen Offenlegungsschrift DE 30 26 510 A1 ist ein Verfahren und eine Vorrichtung zur Entfernung unerwünschten Materials von einem bearbeiteten Werkstück mittels Ultraschall bekannt. Dabei wird das Werkstück einer Ultraschallvibration in einem strömenden Medium ausgesetzt und dazu zwischen zwei Spannelementen eingespannt. Die Ultraschallvibrationen wirken über ein erstes Spannelement auf das Werkstück und auf das zweite Spannelement ein. Nachteilig hierbei ist, dass der Ultraschall nicht direkt, sondern über das erste Spannelement eingekoppelt wird. Zudem ist eine besondere Lagerung für das zweite Spannelement notwendig.

Der Erfindung liegt die Aufgabe zugrunde, für die Entfernung festgesetzter Gleitschleifkörper oder dergl. ein zuverlässiges, mit hohem Wirkungsgrad arbeitendes Verfahren zu entwickeln, das sich weitgehend automatisieren lässt.

Ausgehend von dem eingangs genannten Verfahren wird diese Aufgabe erfindungsgemäß dadurch gelöst, dass das zu bearbeitende Werkstück vibrationsfrei auf einem Widerlager festgelegt und dann eine Sonotrode einer Ultraschalleinrichtung unmittelbar auf einen zu entfernenden Gleitschleifkörper oder dergl. aufgesetzt und Letzterer mit einer elastomechanischen Schwingung oberhalb der Hörgrenze bis zu seiner Zerstörung beaufschlagt wird und dass die zerstörten bzw. entfernten Gleitschleifkörper einer Wiederaufbereitung zugeführt werden.

Während die nach den herkömmlichen Verfahren entfernten Gleitschleifkörper als Sondermüll gelten und somit eine kostspielige Entsorgung erfordern, gibt das erfindungsgemäße Verfahren die Möglichkeit, die zerstörten bzw. entfernten Gleitschleifkörper oder dergleichen einer Wiederaufbereitung zuzuführen.

Ultraschall ist eine elastomechanische Schwingung oberhalb der Hörgrenze. Sie reicht von 20 kHz bis über den MHz-Bereich hinaus und wird aus elektrischer Energie mit piezoelektrischen oder magnetostriktiven Schallwandlern erzeugt. Im Bereich der Fertigungstechnik findet der Ultraschall bereits Anwendung zum Reinigen und zum Schweißen. Zum Bearbeiten in definiertem Wirkbereich der Werkstücke bedient man sich im Stand der Technik einer Ultraschalleinrichtung, bei der ein im Schwingungsknoten gelagerter Schallkopf seine Resonanzschwingung auf einen Verstärker (Booster) und zur Amplitudenvergrößerung durch eine Sonotrode in den Werkzeugwirkbereich der Maschine überträgt. Beim Schweißen von Metallen nutzt man die Scherwirkung der Fügepartner, beim Fügen von Kunststoffen die Druck- und Zugphasen innerhalb der Thermoplaste aus.

Bekannt ist auch ein Ultraschallsenken bzw. Ultraschallbohren, das auf der Zerspanung von harten, spröden Materialien durch eine Schleifmittelsuspension beruht, die im Wirkbereich zwischen dem Werkstück und dem als Werkzeug ausgebildeten Sonotrodenende angreift.

Bei all diesen vorbekannten Verfahren befindet sich aber zwischen Sonotrode und Werkstück ein Medium (z.B. eine Flüssigkeit oder eine Schleifmittelsuspension), während das erfindungsgemäße Verfahren ein unmittelbares Aufsetzen der Sonotrode insbesondere auf dem zu zerstörenden Gleitschleifkörper verlangt. Dabei ist es erfindungsgemäß zweckmäßig, wenn das Aufsetzen der Sonotrode auf einen Gleitschleifkörper oder dergleichen mit einem regelbaren Anlagedruck erfolgt.

Die Steuerung der Leistungszufuhr zur Sonotrode kann erfindungsgemäß dadurch erfolgen, dass der beim Beginn der Zerstörung des Gleitschleifkörpers oder dergleichen einsetzende Druckabfall des Anlagedruckes die Leistungszufuhr zur Sonotrode unterbricht, oder aber durch eine Kamerakontrolle des Zerstörungszustandes des beaufschlagten Gleitschleifkörpers.

Die Zufuhr der zu bearbeitenden Werkstücke in den Arbeitsbereich der Sonotrode kann vollautomatisch in Taktschritten erfolgen, wobei das Transportsystem z.B. ein Karussell, ein Förderband, ein Kettenförderer oder dergleichen sein kann.

Die Sonotrode kann hinsichtlich des zu beaufschlagenden Gleitschleifkörpers oder dergleichen über eine Lageerkennung positionsgesteuert sein.

Die nach der Ultraschallbehandlung gelösten, gegebenenfalls noch am Werkstück anhaftenden Reste des Gleitschleifkörpers oder dergleichen können durch Druckluft ausgeblasen, mit flüssigen Mitteln weggespült oder aber mit Luft oder Flüssigkeit abgesaugt werden.

Eine erfindungsgemäße Vorrichtung zur Durchführung eines erfindungsgemäßen Verfahrens ist gekennzeichnet durch eine Aufnahme für das zu bearbeitende Werkstück, durch ein der Aufnahme zugeordnetes Widerlager zur vibrationsfreien Anlage des Werkstückes, durch eine einen Anschluss an einen HF-Generator aufweisende Ultraschalleinrichtung, die einen Schallkopf, einen Booster und eine Sonotrode umfasst, durch eine Führungs- und Andrückeinrichtung zum Ausrichten der Sonotrode gegenüber der genannten Aufnahme und zum Andrücken der Sonotrode gegen einen zu entfernenden Gleitschleifkörper oder dergleichen, durch eine Führungs- und Andrückeinrichtung zum Ausrichten der Sonotrode gegenüber der genannten Aufnahme und zum Andrücken der Sonotrode gegen einen zu entfernenden Gleitschleifkörper und durch eine unterhalb der Werkstück-Aufnahme vorgesehene Auffang- und Abfördereinrichtung für die zerstörten Gleitschleifkörper oder dergleichen, die einem Zuführen der entfernten Gleitschleifkörper oder dergleichen zu einer Wiederaufbereitung dient.

Wichtig bei der Durchführung des erfindungsgemäßen Verfahrens ist eine feste und vibrationsfreie Auflage des Werkstücks auf einem Widerlager. Für einen hohen Wirkungsgrad ist es ferner zweckmäßig, wenn das freie Ende der Sonotrode einen größtmöglichen Flächenkontakt mit dem zu zerstörenden Gleitschleifkörper erhält. Es ist daher zweckmäßig, wenn das freie Ende der Sonotrode durch ein auswechselbares Druckstück gebildet ist, dessen Druckfläche jeweils unterschiedlich konturierten Gegenflächen angepasst ist.

Werkstück-Aufnahme und -Widerlager können durch eine hydraulische Einspannung gebildet sein, unterhalb von der eine Auffang- und Abfördereinrichtung für die zerstörten Gleitschleifkörper oder dergleichen vorgesehen werden kann.

Weitere Vorteile der Erfindung werden anhand eines Ausführungsbeispieles näher erläutert.

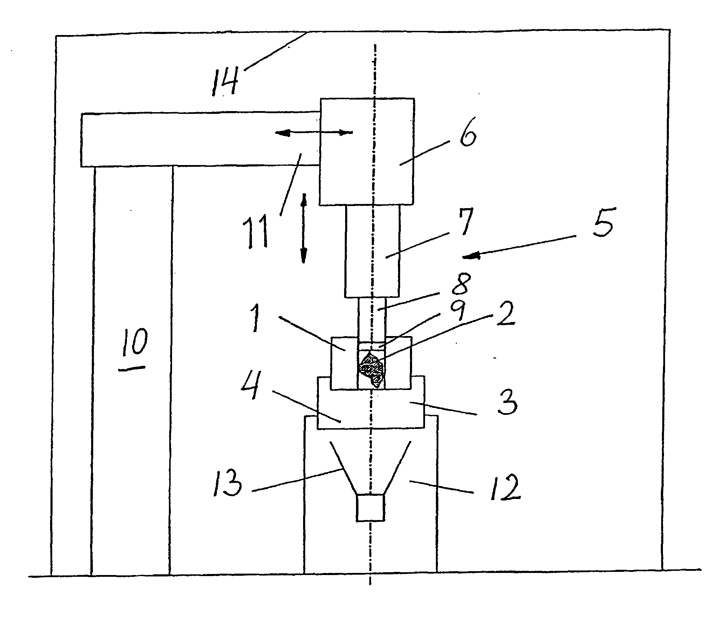

In der Zeichnung ist eine als Beispiel dienende Ausführungsform der Erfindung schematisch dargestellt.

Die Zeichnung zeigt in Seitenansicht bzw. im lotrechten Schnitt eine Vorrichtung zum Befreien metallischer Werkstücke 1 von anhaftenden bzw. festgeklemmten, aus Hartstoffen bestehenden Gleitschleifkörpern 2 oder dergleichen. In dem dargestellten Ausführungsbeispiel hat sich ein Gleitschleifkörper 2 in einer Bohrung des schematisch angedeuteten Werkstückes 1 verklemmt.

Für das Werkstück 1 ist eine als Aufspannung ausgebildete Aufnahme 3 vorgesehen, der ein Widerlager 4 zugeordnet ist, auf dem das Werkstück 1 vibrationsfrei aufliegt. Vorgesehen ist ferner eine Ultraschalleinrichtung 5, die an einen nicht näher dargestellten HF-Generator angeschlossen ist und im wesentlichen aus einem Schallkopf 6, einem Booster (Verstärker) 7 und einer das untere freie Ende bildenden Sonotrode 8 besteht. Um eine bessere Anlage der Sonotrode 8 an jeweils unterschiedlich konturierten Gegenflächen des Werkstückes 1 oder eines Gleitschleifkörpers 2 zu gewährleisten, kann das freie Ende der Sonotrode 8 durch ein auswechselbares Druckstück 9 mit entsprechend angepasster Druckfläche gebildet sein.

Gemäß der schematischen Darstellung ist die Ultraschalleinrichtung 5 an einem Maschinenständer 10 montiert. Nicht näher dargestellt ist eine Führungs- und Andrückeinrichtung 11, mit deren Hilfe die Sonotrode 8 gegenüber der Aufnahme 3 ausgerichtet und dann gegen das zu bearbeitende Werkstück 1 bzw. einen zu entfernenden Gleitschleifkörper 2 angedrückt werden kann.

Nicht im einzelnen dargestellt ist ein Transportsystem 12 zum An- und Abfördern der zu bearbeitenden Werkstücke 1.

Unterhalb der Werkstück-Aufnahme 3 bzw. des Widerlagers 4 ist eine Auffang- und Abfördereinrichtung 13 für die zerstörten Gleitschleifkörper 2 vorgesehen, die dann einer Wiederaufbereitung zugeführt werden können.

Die gesamte Vorrichtung ist von einem Schallschutz 14 umschlossen. Aus Sicherheitsgründen kann der unmittelbare Bearbeitungsbereich noch von einer etwaig abspringende Partikel auffangenden Schutzwandung umschlossen sein.

## Patentansprüche

1. Verfahren zum Befreien metallischer Werkstücke von festgeklemmten, aus Hartstoffen bestehenden Gleitschleifkörpern oder dergleichen, **dadurch gekennzeichnet, dass** das zu bearbeitende Werkstück (1) vibrationsfrei auf einem Widerlager (4) festgelegt und dann eine Sonotrode (8) einer Ultraschalleinrichtung (5) unmittelbar auf einen zu entfernenden Gleitschleifkörper (2) oder dergleichen aufgesetzt und Letzterer mit einer elastomechanischen Schwingung oberhalb der Hörgrenze bis zu seiner Zerstörung beaufschlagt wird und **dass** die zerstörten bzw. entfernten Gleitschleifkörper (2) oder dergleichen einer Wiederaufbereitung zugeführt werden.

2. Verfahren nach Anspruch 1, **dadurch gekennzeichnet, dass** das Aufsetzen der Sonotrode (8) auf einen Gleitschleifkörper (2) oder dergleichen mit einem regelbaren Anlagedruck erfolgt.

3. Verfahren nach Anspruch 2, **dadurch gekennzeichnet, dass** der beim Beginn der Zerstörung des Gleitschleifkörpers (2) oder dergleichen einsetzende Druckabfall des Anlagedruckes die Leistungszufuhr zur Sonotrode (8) unterbricht.

4. Verfahren nach Anspruch 1 oder 2, **gekennzeichnet durch** eine Kamerakontrolle des Zerstörungszustandes des beaufschlagten Gleitschleifkörpers (2).

5. Verfahren nach Anspruch 4, **dadurch gekennzeichnet, dass** die Kamerakontrolle die Leistungszufuhr zur Sonotrode (8) steuert.

6. Verfahren nach einem der vorhergehenden Ansprüche, **gekennzeichnet durch** eine vollautomatische, in Taktschritten arbeitende Zufuhr der zu bearbeitenden Werkstücke.

7. Verfahren nach einem der vorhergehenden Ansprüche, **dadurch gekennzeichnet, dass** die Sonotrode (8) hinsichtlich des zu beaufschlagenden Gleitschleifkörpers (2) oder dergleichen über eine Lageerkennung positionsgesteuert wird.

8. Vorrichtung zur Durchführung des Verfahrens zum Befreien metallischer Werkstücke von festgeklemmten, aus Hartstoffen bestehenden Gleitschleifkörpern oder dergleichen nach einem der vorhergehenden Ansprüche, **gekennzeichnet durch** eine Aufnahme (3) für das zu bearbeitende Werkstück (1), **durch** ein der Aufnahme (3) zugeordnetes Widerlager (4) zur vibrationsfreien Anlage des Werkstückes (1), **durch** eine einen Anschluss an einen HF-Generator aufweisende Ultraschalleinrichtung (5), die einen Schallkopf (6), einen Booster (7) und eine Sonotrode (8) umfasst, **durch** eine Führungs- und Andrückeinrichtung (11) zum Ausrichten der Sonotrode (8) gegenüber der genannten Aufnahme (3) und zum Andrücken der Sonotrode (8) gegen einen zu entfernenden Gleitschleifkörper (2) oder dergleichen und **durch** eine unterhalb der Werkstück-Aufnahme (3) vorgesehene Auffang- und Abfördereinrichtung (13) für die zerstörten Gleitschleifkörper (2) oder dergleichen, die einem Zuführen der entfernten Gleitschleifkörper oder dergleichen zu einer Wiederaufbereitung dient.

9. Vorrichtung nach Anspruch 8, **dadurch gekennzeichnet, dass das** freie Ende der Sonotrode (8) durch ein auswechselbares Druckstück (9) gebildet ist, dessen Druckfläche jeweils unterschiedlich konturierten Gegenflächen angepasst ist.

10. Vorrichtung nach Anspruch 8 oder 9, **dadurch gekennzeichnet, dass** Werkstück-Aufnahme (3) und -Widerlager (4) durch eine hydraulische Einspannung gebildet sind.

11. Vorrichtung nach einem der Ansprüche 8 bis 10, **gekennzeichnet durch** einen sie umschließenden Schallschutz (14).

## Claims

1. Method for freeing metallic workpieces of lodged barrel grinding particles or the like, consisting of hard materials, **characterized in that** the workpiece (1) to be processed is fixed on an abutment (4) free from vibration and then a sonotrode (8) of an ultrasonic device (5) is placed directly onto a barrel grinding particle (2) or the like to be removed and the latter is exposed to an elastomechanical vibration above the audible limit until it is destroyed and **in that** the destroyed or removed barrel grinding particles (2) or the like are passed on for recycling.

2. Method according to Claim 1, **characterized in that** the placing of the sonotrode (8) onto a barrel grinding particle (2) or the like takes place with a contact pressure which can be regulated.

3. Method according to Claim 2, **characterized in that** the pressure drop in the contact pressure occurring when the barrel grinding particle (2) or the like begins to be destroyed interrupts the power supply to the sonotrode (8).

4. Method according to Claim 1 or 2, **characterized by** camera monitoring of the state of destruction of the exposed barrel grinding particle (2).

5. Method according to Claim 4, **characterized in that** the camera monitoring controls the power supply to the sonotrode (8).

6. Method according to one of the preceding claims, **characterized by** a fully automatic supply, operating in intermittent steps, of the workpieces to be processed.

7. Method according to one of the preceding claims, **characterized in that** the sonotrode (8) is positionally controlled by means of a position detection with regard to the barrel grinding particle (2) or the like to be exposed.

8. Device for carrying out the method for freeing metallic workpieces of lodged barrel grinding particles or the like, consisting of hard materials, according to one of the preceding claims, **characterized by** a holder (3) for the workpiece (1) to be processed, by an abutment (4) assigned to the holder (3) for the workpiece (1) to bear against with vibration-free contact, by an ultrasonic device (5) which has a connection to an HF generator and comprises a sound head (6), a booster (7) and a sonotrode (8), by a guiding and pressure-exerting device (11) for aligning the sonotrode (8) with respect to the said holder (3) and for pressing the sonotrode (8) against a barrel grinding particle (2) or the like to be removed, and by a catching and conveying-away device (13) for the destroyed barrel grinding particles (2) or the like, which is provided underneath the workpiece holder (3) and serves for passing the removed barrel grinding particles or the like on for recycling.

9. Device according to Claim 8, **characterized in that** the free end of the sonotrode (8) is formed by an exchangeable thrust piece (9), the pressure area of which is respectively adapted to differently contoured opposing areas.

10. Device according to Claim 8 or 9, **characterized in that** the workpiece holder (3) and abutment (4) are formed by a hydraulic clamping means.

11. Device according to one of Claims 8 to 10, **characterized by** a soundproofing guard (14) enclosing it.

## Revendications

1. Procédé pour retirer des corps de ponçage en matériaux durs, bloqués, ou analogues, sur des pièces d'oeuvre métalliques, **caractérisé en ce que** la pièce d'oeuvre (1) est fixée sans vibration sur un contre-appui (4) puis une sonotrode (8) d'un dispositif à ultrasons (5) est posée directement sur le corps de ponçage (2) ou analogue à retirer, et on applique à ce dernier une vibration élastomécanique au-delà de la limite audible jusqu'à sa destruction, et **en ce que** les corps de ponçage (2) ou analogues détruits ou retirés sont conduits vers une ré-ouvraison.

2. Procédé selon la revendication 1, **caractérisé en ce que** la pose de la sonotrode (8) sur un corps de ponçage ou analogue (2) s'effectue avec une pression d'appui réglable.

3. Procédé selon la revendication 2, **caractérisé en ce que** la chute de pression d'appui qui survient au début de la destruction du corps de ponçage (2) ou analogue interrompt l'amenée de puissance à la sonotrode (8).

4. Procédé selon la revendication 1 ou 2, **caractérisé par** un contrôle par caméra de l'état de destruction du corps de ponçage (2) attaqué.

5. Procédé selon la revendication 4, **caractérisé en ce que** le contrôle par caméra commande l'amenée de puissance à la sonotrode (8).

6. Procédé selon l'une des revendications précédentes, **caractérisé par** un acheminement entièrement automatique, fonctionnant par étapes de cadencement, des pièces d'oeuvre à traiter.

7. Procédé selon l'une des revendications précédentes, **caractérisé en ce que** la sonotrode (8) est commandée en position par l'intermédiaire d'une reconnaissance de position, à l'égard du corps de ponçage (2) ou analogue à attaquer.

8. Dispositif pour la mise en oeuvre du procédé pour retirer des corps de ponçage en matériaux durs, bloqués, ou analogues, sur des pièces d'oeuvre métalliques, selon l'une des revendications précédentes, **caractérisé par** une monture (3) pour la pièce d'oeuvre (1) à traiter, par un contre-appui (4) associé à la monture (3) pour l'appui sans vibration de la pièce d'oeuvre (1), par un dispositif à ultrasons (5) comportant un raccordement à un générateur HF, une tête sonore (6), un amplificateur (7) et une sonotrode (8), par un dispositif de guidage et de pression (11) pour aligner la sonotrode (8) par rapport à la monture précitée (3) et pour appliquer la sonotrode (8) contre un corps de ponçage (2) ou analogue à retirer, et par un dispositif de collecte et d'évacuation (13), prévu en dessous de la monture (3) de la pièce d'oeuvre, pour les corps de ponçage (2) ou analogues détruits, ce dispositif servant à un acheminement des corps de ponçage ou analogues retirés à une ré-ouvraison.

9. Dispositif selon la revendication 8, **caractérisé en ce que** l'extrémité libre de la sonotrode (8) est constituée par une pièce presseuse interchangeable (9) dont la face de pression est adaptée à des contre-faces présentant des contours respectivement différents.

10. Dispositif selon la revendication 8 ou 9, **caractérisé en ce que** la monture (3) pour la pièce d'oeuvre et le contre-appui (4) pour la pièce d'oeuvre sont constitués par un serrage hydraulique.

11. Dispositif selon l'une des revendications 8 à 10, **caractérisé par** une protection acoustique (14) qui l'enveloppe.
